**Europäisches Patentamt**

**European Patent Office**

**Office européen des brevets**

(19)

(11) Numéro de publication : **0 320 415 B1**

(12) **FASCICULE DE BREVET EUROPEEN**

(45) Date de publication du fascicule du brevet :
01.07.92 Bulletin 92/27

(51) Int. Cl.⁵ : **F02B 63/04,** **H02K 7/00,**
**F04B 35/06**

(21) Numéro de dépôt : **88420407.4**

(22) Date de dépôt : **05.12.88**

(54) **Groupe électrogène motocompresseur.**

(30) Priorité : **07.12.87 FR 8717509**

(43) Date de publication de la demande :
**14.06.89 Bulletin 89/24**

(45) Mention de la délivrance du brevet :
**01.07.92 Bulletin 92/27**

(84) Etats contractants désignés :
**BE CH DE FR GB IT LI LU NL**

(56) Documents cités :
**WO-A-85/04149**
**FR-A- 651 378**
**FR-A- 1 473 215**
**US-A- 4 293 281**

(73) Titulaire : **Rivkine, Jacques**
**33, chemin Moise Duboule**
**CH-1209 Grand-Saconnex (Genève) (CH)**

(72) Inventeur : **Rivkine, Jacques**
**33, chemin Moise Duboule**
**CH-1209 Grand-Saconnex (Genève) (CH)**

(74) Mandataire : **de Beaumont, Michel**
**Cabinet Poncet 7, chemin de Tillier B.P. 317**
**F-74008 Annecy Cédex (FR)**

**Description**

La présente invention concerne les sources d'énergie mobiles permettant notamment de délivrer l'énergie nécessaire sur un chantier de construction d'immeubles ou de travaux publics. L'invention concerne plus particulièrement un groupe électrogène motocompresseur mobile, permettant, à partir d'un moteur thermique, d'obtenir d'une part de l'énergie électrique et d'autre part de l'énergie pneumatique sous forme d'air comprimé.

On connait déjà des groups électrogènes mobiles comprenant, sur un chassis mobile doté de roues, un moteur thermique couplé mécaniquement à un générateur de courant électrique tel qu'un alternateur. Un tel groupe électrogène délivre de l'énergie électrique, mais ne suffit pas pour tous les besoins apparaissant sur un chantier. En effet, un grand nombre d'outils sont actuellement proposés dans le commerce, qui sont mus par de l'énergie pneumatique sous forme d'air comprimé.

Pour résoudre ce problème de l'entraînement des outils pneumatiques sur un chantier, on peut imaginer d'accoupler mécaniquement, en sortie de l'arbre moteur d'un group électrogène, un compresseur à air comprimé, avec interposition d'un embrayage mécanique. La transmission mécanique permet alors d'entraîner le générateur électrique par le moteur thermique, et d'entraîner le compresseur par le même moteur thermique.

Malgré la présence éventuelle d'embrayages et de boites de vitesses, un tel entraînement mécanique n'assure pas une souplesse suffisante pour rendre compatible la vitesse de rotation du moteur thermique avec les vitesses nécessaires d'entraînement du générateur électrique et du compresseur, ces vitesses étant sensiblement différentes et variables les unes par rapport aux autres.

Un tel accouplement mécanique d'un compresseur et d'un générateur électrique en sortie d'un moteur thermique est décrit dans le document WO-A-8 504 149, dans le domaine technique des alimentations en air comprimé et énergie électrique pour la navigation aérienne et spatiale.

Les moyens d'accouplement mécaniques ne permettent pas l'adaptation rapide, quasi-instantanée, de la puissance et de la vitesse de rotation délivrées par l'arbre du moteur thermique respectivement au générateur électrique et au compresseur, en fonction des puissances de sortie demandées à chacun d'eux. Une telle adaptation apparaît très utile pour les applications de fourniture d'énergie sur un chantier, en particulier lorsque l'on doit alimenter un poste de soudure électrique. En effet, un poste de soudure électrique fonctionne de manière essentiellement variable et intermittente, et consomme une grande quantité d'énergie lors de ses périodes de fonctionnement. Il en résulte qu'une telle solution mécanique n'est pas adaptée pour la fourniture d'énergie sur un chantier.

En outre, un tel dispositif d'entraînement mécanique est relativement encombrant, de sorte que sa disposition sur un chassis roulant conduit à une installation lourde et onéreuse, et à un encombrement peu compatible avec les nécessités des chantiers.

Le document US-A-4 293 281 décrit un dispositif de production d'air comprimé dans lequel un compresseur est sollicité mécaniquement soit par un moteur électrique alimenté par le secteur, soit par un moteur thermique auxiliaire. Des moyens sont prévus pour empêcher d'alimenter simultanément en énergie le moteur thermique auxiliaire et le moteur électrique, qui sont eux-mêmes couplés mécaniquement par un embrayage. Ce document n'apporte pas de solution aux problèmes exposés ci-dessus de fourniture d'énergie sur un chantier.

La présente invention a notamment pour objet d'éviter les inconvénients des groupes connus, en proposant une nouvelle structure de source de puissance permettant de délivrer simultanément une puissance électrique et une puissance pneumatique, à partir d'un seul moteur thermique selon des vitesses de rotation d'arbre de moteur électrique et de compresseur essentiellement différentes, et de s'adapter de manière simple et économique aux différences de vitesses. On peut par exemple définir de manière économique une gamme de dispositifs différents à partir d'éléments dont les vitesses de rotation nominales sont différentes.

Selon un autre objet de l'invention, cette nouvelle structure permet une grande souplesse dans la fourniture des énergies électriques et pneumatiques, de sorte qu'il est possible de modifier à volonté l'une on l'autre des puissances électrique ou pneumatique sans modifier les autres puissances délivrées par le dispositif. Par exemple, il est possible de faire varier la puissance pneumatique absorbée par les outils alimentés par le dispositif de l'invention, sans modifier aucunement la tension ou le courant électrique délivrés par le même dispositif. De même, il est possible de modifier la puissance électrique demandée au dispositif par les outils qui lui sont connectés, sans que cela modifie la pression d'air envoyée sur les outils pneumatiques.

Selon un mode de réalisation, la structure selon l'invention permet d'adapter de manière permanente et automatique l'énergie mécanique consommée par le compresseur en fonction de l'énergie électrique demandée au générateur électrique. En particulier, il est possible d'interrompre et de rétablir instantanément le flux d'énergie transmis au compresseur. Ainsi, lors d'une utilisation en chantier pour alimenter un poste de soudure en même temps que des outils pneumatiques, on peut interrompre la fourniture d'énergie au compresseur pendant les périodes de fonctionnement du poste à soudure, et obtenir ainsi une puissance maximale de soudure.

Un autre objet de l'invention est de concevoir une architecture particulière du dispositif, permettant de réaliser une source de puissance dont l'encombrement est réduit, dont le poids est diminué. Ainsi, le dispositif de l'invention peut être disposé sur un chassis roulant de dimensions faibles, facilement manoeuvrable sur un chantier, et peu encombrant.

Selon un autre objet de l'invention, l'architecture particulière permet un contrôle rapide et très aisé de toutes les sources d'énergie fournies par le dispositif, l'utilisateur ayant accès simultanément à tous les contrôles.

Pour atteindre ces objets ainsi que d'autres, le groupe électrogène motocompresseur mobile selon la présente invention comprend les caractéristiques selon la revendication 1.

Selon un mode de réalisation avantageux le groupe motocompresseur est fixé sur le générateur électrique, ledit générateur électrique étant en prolongement du moteur thermique.

D'autres objets et avantages de la présente invention ressortiront de la description suivante de modes de réalisation particuliers, faite en relation avec les figures jointes, parmi lesquelles :

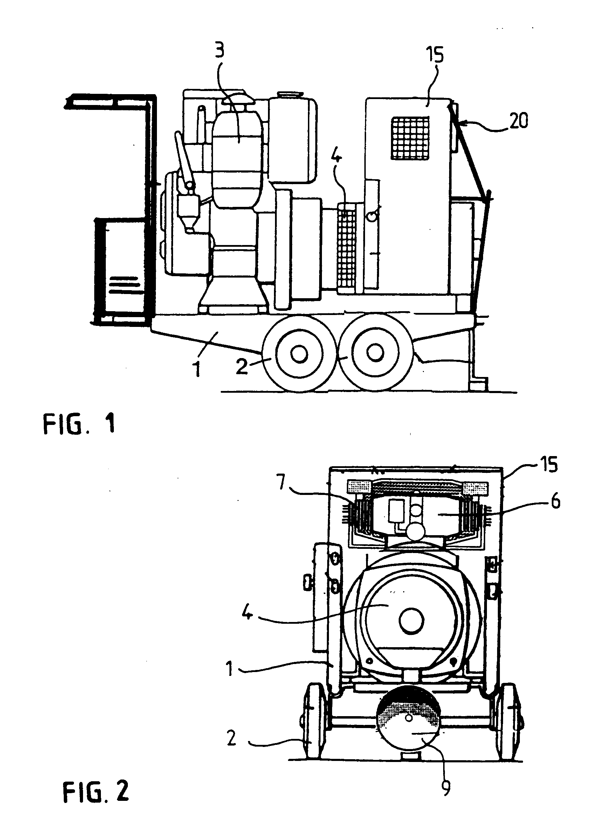

– la figure 1 représente une vue de côté d'un dispositif selon un premier mode de réalisation de la présente invention ;

– la figure 2 représente une vue de face d'un dispositif de la figure 1, tableau de commande enlevé ;

– la figure 3 représente schématiquement les liaisons mécaniques et électriques entre les organes principaux du dispositif '

– la figure 4 représente une vue de face du dispositif de l'invention, montrant le tableau de commande et de contrôle ; et

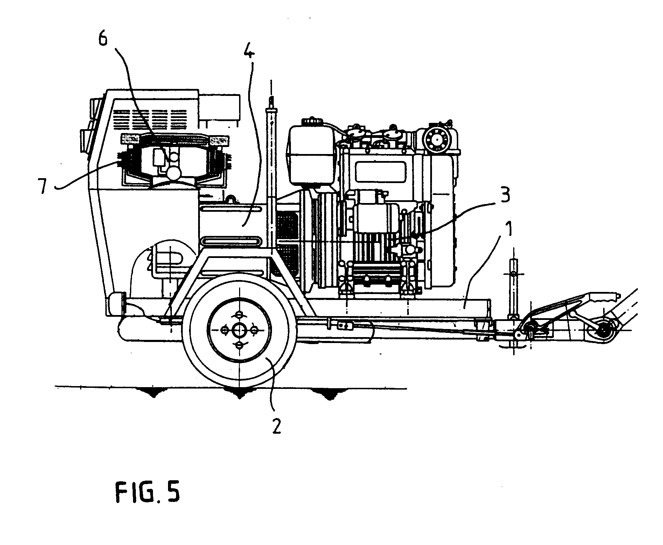

– la figure 5 représente, en vue de côté, le détail de réalisation d'un dispositif de l'invention selon un second mode de réalisation.

Comme le représentent les figures, le groupe générateur selon la présente invention comprend un chassis mobile 1, monté sur des roues 2, le chassis 1 portant l'ensemble des organes actifs du dispositif.

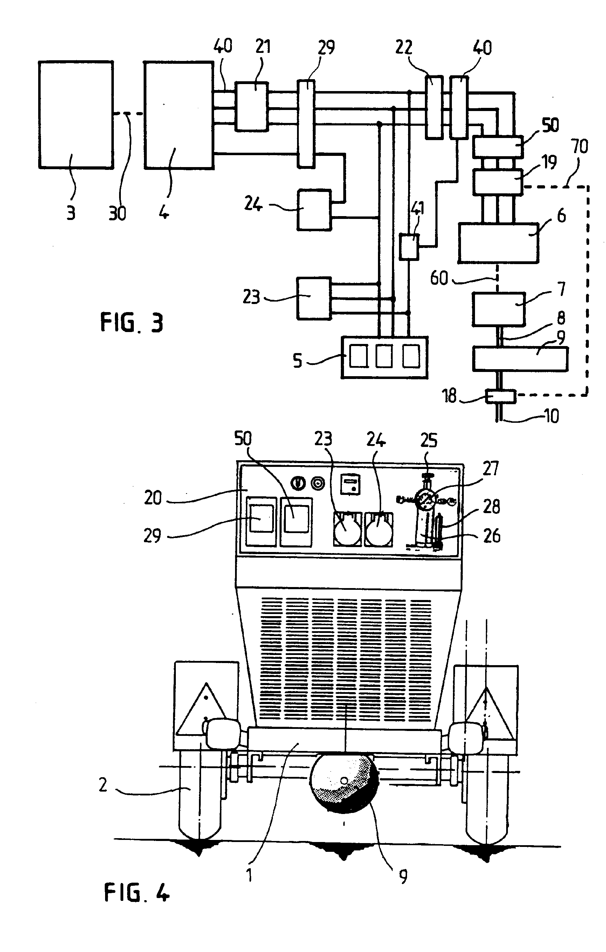

Le chassis 1 porte un moteur thermique 3, couplé mécaniquement par un arbre 30 à un générateur électrique 4. Le générateur électrique 4 délivre, par ses conducteurs de sortie 40, une puissance électrique d'une part jusqu'à des conducteurs de sortie 5, mieux visibles sur la figure 3, et d'autre part à un moteur électrique 6. Le moteur électrique 6 est couplé mécaniquement, par une transmission mécanique 60 telle qu'un arbre, à un compresseur mécanique 7 délivrant, sur une canalisation intermédiaire 8, une puissance pneumatique sous forme d'air comprimé. La canalisation intermédiaire 8 conduit à un réservoir d'air 9, de manière connue dans le domaine des compresseurs.

Le moteur thermique 3 peut être un moteur essence ou diésel. Selon un mode de réalisation, on peut choisir un moteur refroidi par air avec turbine soufflante axiale. A titre d'exemple, pour des puissances utilisables sur un chantier, on peut utiliser un moteur diésel LOMBARDINI 6 LD 400 ou autre, un moteur à essence HONDA de références G 400 ou autre, un moteur à essence BRIGS STRATTON de référence 254422 ou autre.

Le moteur thermique 3 est équipé d'un régulateur de type connu afin de maintenir le régime du moteur à une vitesse constante.

Le générateur électrique 4 peut être avantageusement un alternateur triphasé, de type autorégulé, autoexcité, autoventilé, à champ tournant et compound à diodes, d'une puissance de 5 à 15 KVA. On peut par exemple utiliser un alternateur LEROY SOMMER de type TAC 243 ou autre, ou un alternateur MEC ALTE de type GPA 3SA ou autre.

L'alternateur 4 comprend de préférence plusieurs enroulements pour délivrer un courant triphasé 380 volts et un courant monophasé 220 volts, utilisés pour les machines électriques, outils portatifs ou projecteurs. Une sortie en courant continu de 27 volts est obtenue par tout moyen connu tel qu'un pont redresseur, non représenté, alimenté par l'alternateur, avec éventuellement un hacheur. Cette sortie 27 volts est utilisée pour pouvoir exécuter tous types de soudure.

L'ensemble moteur électrique 6-compresseur 7 peut être un compresseur 7 de type coaxial bicylindre, monoétagé, bi-étagé ou à vis, délivrant une pression de 10 à 15 bars, entraîné par un moteur électrique 6 triphasé, tropicalisé, avec pressostat et manoréducteur. A titre d'exemple, on peut utiliser un groupe motocompresseur DARI de références CM 28T ou autre, ou un groupe CLEAR de référence BX 2350 ou autre, avec des moyens connus de régulation de pression d'air.

L'air comprimé, avec une pression variable de 5 à 15 bars, est prévu pour le branchement de pistolets de fixation ou agrafeuses pneumatiques de haute performance, permettant la fixation de bardages métalliques ou d'isolants sur des ossatures ou supports métalliques ou béton.

Sous le bâti, entre les roues, est fixé le réservoir d'air 9, par exemple d'environ 25 litres, alimenté en air comprimé par la canalisation intermédiaire 8.

Le motocompresseur bicylindre flasque, avec son moteur électrique 6 et son compresseur 7, sont fixés sur la génératrice 4. Comme le représentent les figures, on voit que le moteur thermique 3, avec ses accessoires de régulation et son réservoir, tient une place relativement importante en hauteur. Par contre, le générateur électrique 4 tient une place relativement faible en hauteur, à peu près la moitié de la place tenue par le moteur thermique 3. Il en résulte que, en disposant le motocompresseur 6-7 au-dessus du générateur 4, l'encombrement total en hauteur de l'ensemble formé par le générateur 4 et le motocompresseur 6-7 est sensiblement le même que l'encombrement du moteur thermique 3. On réalise ainsi un ensemble particulièrement compact, peu encombrant, et bien adapté à une utilisation sur chantier. Cette disposition compacte est rendue possible par la nouvelle structure selon l'invention, dans laquelle le compresseur 7 est entraîné mécaniquement par un moteur électrique 6 et non pas par l'arbre de rotation due moteur thermique 3. Ainsi, de manière surprenante, on constate que l'encombrement est réduit par rapport à un entraînement mécanique classique, bien que le dispositif selon l'invention comprenne un élément de plus sous forme du moteur électrique 6 d'entraînement du compresseur 7.

Une carrosserie 15 recouvre la génératrice et le compresseur.

A l'avant de la carrosserie 15 est placé un tableau 20 de distribution pour les différentes énergies. Le tableau comprend des prises électriques 23 connectées aux conducteurs de sortie 5 du générateur 4 pour fournir le 380 volts, des prises électriques 24 connectées de manière similaire pour fournir le 220 volts, une prise électrique 27 volts ainsi que des robinets 25 de distribution d'air montés sur un réducteur de pression 26 avec vis de réglage, manomètre 27 de contrôle, pressostat 18 et soupape de sécurité 28.

Le tableau est aussi équipé d'un interrupteur différenciel 29 tétrapolaire, ainsi que d'interrupteurs 50 permettant d'enclencher le compresseur.

Le générateur électrique 4 est surdimentionnée, afin de pouvoir alimenter simultanément les outils électriques qui seraient branchés et le moteur électrique entraînant le compresseur d'air comprimé.

Dans le mode de réalisation représenté sur la figure 3, le moteur thermique 3 est accouplé mécaniquement au générateur électrique 4. Le générateur électrique 4 est connecté électriquement à un disjoncteur 21 triphasé couplé à l'interrupteur 29, qui transmet la puissance électrique aux bornes de sortie 5 et au moteur électrique 6 du groupe motocompresseur. Un second disjoncteur 22 couplé à l'interrupteur 50 est interposé à l'entrée du groupe motocompresseur, afin de couper l'alimentation du moteur électrique 6 dans le cas où l'on n'a pas besoin d'énergie mécanique sous forme d'air comprimé. Le moteur électrique 6 est couplé mécaniquement au compresseur 7, qui délivre de l'air comprimé dans le réservoir 9 par la canalisation intermédiaire 8. Une canalisation de sortie 10 d'air comprimé relie le réservoir 9 et le réducteur de pression 26, pour la sortie d'air comprimé.

La puissance totale du groupe, délivrée par le moteur thermique 3, peut être répartie selon les besoins par enclenchement ou déclenchement des sources d'énergie électrique spécifiques au moyen des interrupteurs.

Selon un mode de réalisation avantageux, un relais 40 est interposé en série sur les bornes d'alimentation du moteur électrique 6 et est commandé par un dispositif détecteur d'intensité de courant électrique 41 connecté en série sur les conducteurs de sortie 5 du générateur 4, de manière que le relais 40 ouvre le circuit d'alimentation du moteur électrique 6 tant que l'intensité du courant électrique dans les conducteurs 5 dépasse un seuil prédéterminé. En choisissant de manière appropriée ledit seuil prédéterminé, on produit l'interruption automatique et instantanée de fonctionnement du moteur électrique 6 et au compresseur 7 pendant des périodes de fonctionnement d'un poste à soudure connecté aux conducteurs 5.

Le régulation de pression d'air dans le réservoir 9 peut être avantageusement assurée par une commande d'alimentation de l'énergie électrique du moteur électrique 6. Pour cela, le pressostat 18 mesure la pression d'air comprimé dans le réservoir 9 et dans le canalisation de sortie 10. Le pressostat 18 sollicite mécaniquement, par une liaison mécanique 70, un interrupteur de régulation 19 lui-même connecté électriquement en série entre le moteur électrique 6 et le générateur électrique 4. L'ensemble formé par l'interrupteur de régulation 19 et par le pressostat 18 est conçu de manière que l'interrupteur de régulation 19 est fermé lorsque la pression d'air dans le réservoir 9 est inférieure à une pression minimale déterminée, et l'interrupteur de régulation 19 est ouvert lorsque la pression d'air dans le réservoir 9 devient supérieure à une pression maximale déterminée.

On comprendra que l'entraînement du compresseur 7 par un moteur électrique 6 permet une grande souplesse de commande, de sorte que la source d'énergie sous forme électrique délivrée sur les conducteurs de sortie 5 et la source d'énergie mécanique délivrée sur la canalisation de sortie d'air comprimé 10 sont pratiquement indépendantes, le débit de l'une des deux sources étant indépendant du débit de l'autre.

**Revendications**

1. Groupe électrogène motocompresseur mobile, comprenant:
   – un chassis (1) mobile doté de roues (2),
   – un moteur thermique (3) couplé mécaniquement à un générateur (4) de courant électrique dont les bornes de sortie sont connectées à des prises de courant de sortie (23, 24),
   – un groupe motocompresseur (6, 7) composé d'un moteur électrique (6) entraînant mécaniquement un compresseur mécanique (7) à air,
   – le compresseur à air (7) débitant de l'air comprimé dans une canalisation intermédiaire (8) conduisant à un réservoir (9) relié à une canalisation de sortie (10) d'air,
   caractérisé en ce que :
   – la canalisation de sortie (10) relie le réservoir (9) à des moyens de commande de pression (26) et de débit (25) d'air en sortie du groupe,

– le moteur électrique (6) est alimenté en énergie électrique exclusivement par le générateur (4) de courant électrique, ledit générateur (4) de courant électrique étant surdimensionné, afin de pouvoir alimenter simultanément les outils électriques qui seraient branchés et le moteur électrique entraînant le compresseur d'air comprimé,

– le groupe électrogène motocompresseur est dépourvu de liaison mécanique entre l'arbre du moteur thermique (3) et l'arbre du moteur électrique (6).

2. Groupe électrogène motocompresseur selon la revendication 1, caractérisé en ce qu'il comprend un interrupteur (50) connecté en série entre le générateur (4) et le moteur électrique (6).

3. Groupe électrogène motocompresseur selon l'une des revendications 1 ou 2, caractérisé en ce qu'un interrupteur de régulation (19) est connecté électriquement en série entre le moteur électrique (6) et le générateur (4), et est sollicité mécaniquement par un pressostat (18) soumis à la pression d'air comprimé présente dans le réservoir (9) et la canalisation de sortie (10), de manière que l'interrupteur de régulation (19) est fermé lorsque la pression est inférieure à une pression minimale déterminée, et est ouvert lorsque la pression d'air comprimé est supérieure à une pression maximale déterminée.

4 . Groupe électrogène motocompresseur selon l'une quelconque des revendications 1 à 3, caractérisé en ce que le groupe motocompresseur (6, 7) est fixé sur le générateur (4) électrique, ledit générateur électrique étant en prolongement du moteur thermique (3).

5. Groupe électrogène motocompresseur selon la revendication 4, caractérisé en ce qu'il comprend une carrosserie (15) recouvrant le générateur (4) électrique et le groupe motocompresseur (6, 7).

6. Groupe électrogène motocompresseur selon l'une quelconque des revendications 1 à 5, caractérisé en ce qu'il comporte un tableau de distribution (20) regroupant les organes de commande et de distribution.

7. Groupe électrogène motocompresseur selon la revendication 6, caractérisé en ce que le tableau de distribution (20) comporte :

– les interrupteurs (50, 29) électriques de commande du moteur électrique (6) et des conducteurs de sortie (5),

– un manomètre (27) de contrôle de pression d'air,

– un réducteur de pression (26) avec vis de réglage,

– une soupape de sécurité (28),

– les prises électriques (23, 24) de distribution d'énergie électrique.

8. Groupe électrogène motocompresseur selon l'une quelconque des revendications 1 à 7, caractérisé en ce qu'il comprend un relais (40) interposé en série sur les bornes d'alimentation du moteur électrique (6) et commandé par un dispositif détecteur d'intensité de courant électrique (41) connecté en série sur les conducteurs de sortie (5) du générateur (4), de manière que le relais (40) ouvre le circuit d'alimentation du moteur électrique (6) tant que l'intensité du courant électrique dans les conducteurs de sortie (5) dépasse un seuil prédéterminé.

**Patentansprüche**

1. Mobiles Stromerzeuger-Motorkompressor-Aggregat, mit:

– einem beweglichen Fahrgestell (1), das mit Rädern (2) versehen ist,

– einem Wärmemotor (3), der mechanisch mit einem elektrischen Stromgenerator (4) verbunden ist, dessen Ausgangsklemmen mit Stromanschlußdosen (23, 24) verbunden sind,

– einem Motorkompressoraggregat (6, 7), das aus einem Elektromotor (6) besteht, der einen mechanischen Luftkompressor (7) antreibt,

– wobei der Luftkompressor (7) verdichtete Luft in eine Zwischenleitung (8) anliefert, die zu einem Speicher (9)führt, der mit einer Luftausgangsleitung (10) verbunden ist,

dadurch gekennzeichnet, daß:

– die Ausgangsleitung (10) den Speicher (9) mit Einrichtungen zur Drucksteuerung (26) und zur Auslaßsteuerung (25) der Luft am Ausgang des Aggregats verbindet,

– der Elektromotor (6) ausschließlich von dem elektrischen Stromgenerator (4) mit elektrischer Energie versorgt wird, wobei der elektrische Stromgenerator (4) überdimensioniert ist, um gleichzeitig elektrische Werkzeuge, die angeschlossen werden, und den Elektro motor versorgen zu können, der den Druckluftkompressor antreibt,

– das Stromerzeuger-Motorkompressor-Aggregat mit keiner mechanischen Verbindung zwischen der Welle des Wärmemotors (3) und der Welle des Elektromotors (6) versehen ist.

2. Stromerzeuger-Motorkompressor-Aggregat nach Anspruch 1, dadurch gekennzeichnet, daß es einen Schalter (50) aufweist, der in Reihe zwischen dem Generator (4) und dem Elektromotor (6) geschaltet ist.

3. Stromerzeuger-Motorkompressor-Aggregat nach einem der Ansprüche 1 oder 2, dadurch gekennzeichnet, daß ein Regelungsschalter (19) elektrisch in Reihe zwischen den Elektromotor (6) und den Generator (4) geschaltet ist und mechanisch durch einen Druckschalter (18) belastet wird, welcher dem Druck der Druckluft, die in dem Speicher (9) und in der Ausgangsleitung (10) vorhanden ist, derart ausgesetzt ist, daß der Regelungsschalter (19) geschlossen ist, wenn der Druck kleiner als ein bestimm ter Minimaldruck ist, und offen ist, wenn der Druck der Druckluft größer ist als ein bestimmter Maximaldruck.

4. Stromerzeuger-Motorkompressor-Aggregat nach einem der Ansprüche 1 bis 3, dadurch gekennzeichnet, daß das Motorkompressoraggregat (6, 7) auf dem Stromgenerator (4) befestigt ist, wobei sich der Stromgenerator in der Verlängerung des Wärmemotors (3) befindet.

5. Stromerzeuger-Motorkompressor-Aggregat nach Anspruch 4, dadurch gekennzeichnet, daß es eine Karosserie (15) aufweist, welche den Stromgenerator (4) und das Motorkompressoraggregat (6, 7) abdeckt.

6. Stromerzeuger-Motorkompressor-Aggregat nach einem der Ansprüche 1 bis 5, dadurch gekennzeichnet, daß es eine Verteilertafel (20) aufweist, an welcher die Steuerund Verteilerorgane gruppiert sind.

7. Stromerzeuger-Motorkompressor-Aggregat nach Anspruch 6, dadurch gekennzeichnet, daß sich die Verteilertafel (20) zusammensetzt aus:
– den elektrischen Schaltern (50, 29) zur Steuerung des Elektromotors (6) und von Ausgangsleitern (5),
– einem Manometer (27) zur Überwachung des Luftdruckes,
– einem Druckminderer (26) mit Regelschraube,
– einem Sicherheitsventil (28),
– den elektrischen Verteileranschlüssen (23, 24) für die elektrische Energie.

8. Stromerzeuger-Motorkompressor-Aggregat nach einem der Ansprüche 1 bis 7, dadurch gekennzeichnet, daß es ein Relais (40) aufweist, das in Reihe zwischen den Versorgungsanschlüssen des Elektromotors (6) angeordnet ist und durch eine Prüfvorrichtung (41) für die elektrische Stromstärke gesteuert wird, die derart in Reihe zwischen die Ausgangsleiter (5) des Generators (4) geschaltet ist, daß das Relais (40) den Versorgungsstrom des Elektromotors (6) öffnet, wenn die elektrische Stromstärke in den Ausgangsleitern (5) eine vorbestimmte Schwelle überschreitet.

**Claims**

1. A mobile motor-compressor generator set, comprising:
– a mobile chassis (1) equipped with wheels (2),
– a heat engine (3) mechanically coupled to a generator (4) of electrical current, whose output terminals are connected to output current sockets (23, 24),
– a motor-compressor unit (6, 7) made up of an electric motor (6) mechanically driving a mechanical air compressor (7),
– the air compressor (7) delivering compressed air into an intermediate duct (8) leading to a tank (9) connected to an air output duct (10),
characterised in that:
– the output duct (10) connects the tank (9) to pressure control means (26) and to output control means (25) of the air leaving the unit,
– the electric motor (6) is supplied with electrical power exclusively by the generator (4) of electrical current, said generator (4) being overdimensioned in order to be able to supply simultaneously any electrical tools which may be connected, and the electric motor driving the air compressor,
– the motor-compressor generator unit has no mechanical connection between the shaft of the heat engine (3) and the shaft of the electric motor (6).

2. A motor-compressor generator set according to Claim 1, characterised in that it comprises a switch (50) connected in series between the generator (4) and the electric motor (6).

3. A motor-compressor generator set according to one of Claims 1 or 2, characterised in that a regulating switch (19) is electrically connected in series between the electric motor (6) and the generator (4), and is mechanically operated by a pressure-sensitive switch (18) responding to the pressure of the compressed air present in the tank (9) and in the output duct (10), so that the regulating switch (19) is closed when the pressure is less than a specific minimum pressure, and is open when the pressure of the compressed air is greater than a specific maximum air pressure.

4. A motor-compressor generator set according to any one of Claims 1 to 3, characterised in that the motor-compressor unit (6, 7) is secured on the electrical generator (4), said electrical generator being an extension of the heat engine (3).

5. A motor-compressor generator set according to Claim 4, characterised in that it comprises a bodywork cover (15) covering the electrical generator (4) and the motor-compressor (6, 7).

6. A motor-compressor generator set according to any one of Claims 1 to 5, characterised in that it comprises a distributor panel (20) assembling the control and distribution elements.

7. A motor-compressor generator set according to Claim 6, characterised in that the distribution panel (20) comprises:
– the electrical control switches (50, 29) for the electric motor (6) and the output conductors (5),
– a pressure gauge (27) for monitoring the air pressure,
– a pressure-reducer (26) with regulating screw,
– a safety valve (28),
– the electrical sockets (23, 24) for distributing electrical power.

8. A motor-compressor generator set according to any one of Claims 1 to 7, characterised in that it comprises a relay (40) interposed in series on the supply terminals of the electric motor (6) and controlled by a current-strength detecting device (41) connected in series on the output conductors (5) of the generator (4) in such a way that the relay (40) opens the supply circuit for the electric motor (6) as long as the current strength of electricity in the output conductors (5) exceeds a predetermined threshold.

FIG. 1

FIG. 2

FIG. 3

FIG. 4

FIG. 5